# EUROPEAN PATENT APPLICATION

(11) **EP 4 221 095 A1**
(43) Date of publication of application: **02.08.2023**
(21) Application number: 20958118.0
(22) Date of filing: 21.10.2020
(51) Int. Cl.: H04L 12/14, H04W 28/16

(54) **POSITIONING METHOD AND RELATED APPARATUS**

(71) Applicant: Huawei Technologies Co., Ltd., Shenzhen, Guangdong 518129 (CN)
(72) Inventor: HAO, Jinping, Shenzhen, Guangdong 518129 (CN); GUO, Yinghao, Shenzhen, Guangdong 518129 (CN); HUANG, Su, Shenzhen, Guangdong 518129 (CN); LIU, Mengting, Shenzhen, Guangdong 518129 (CN)
(74) Representative: Pfenning, Meinig & Partner mbB
(86) International application number: PCT/CN2020/122597
(87) International publication number: WO 2022/082535

(57) **Abstract**

This application provides a positioning method and a related apparatus. The positioning method includes: A location management function device receives a request message, where the request message is for requesting to position a terminal device, and the request message includes integrity information of positioning. The location management function device positions the terminal device, where the integrity information includes information for indicating a requirement on positioning integrity. In this way, in a process of obtaining a location, the location management function device can determine a positioning requirement based on the integrity information in the request message, to evaluate positioning reliability, and help determine the positioning reliability.

## Description

### TECHNICAL FIELD

This application relates to the field of wireless communication technologies, and in particular, to a positioning method and a related apparatus.

### BACKGROUND

Positioning is one of important functions in 5G NR. In 3GPP R16, a plurality of positioning technologies are defined. For example, in an uplink positioning technology, an access network device determines a location of a terminal device by measuring a time difference (UL-TDOA) or an angle of arrival (UL-AoA) of a sounding reference signal (sounding reference signal, SRS) of the terminal device arriving at a plurality of access network devices. In a downlink positioning technology, a terminal device or an access network device obtains a location of the terminal based on a measurement result obtained by the terminal device by measuring downlink positioning reference signals (positioning reference signals, PRSs) of a plurality of access network devices.

However, in an existing positioning process, only positioning can be implemented, and whether the positioning is reliable cannot be determined.

### SUMMARY

This application provides a positioning method and a related apparatus, to help determine positioning reliability.

According to a first aspect, this application provides a positioning method, including: A location management function (location management function, LMF) device receives a request message, where the request message is for requesting to position a terminal device, and the request message includes integrity information of positioning; and the location management function device positions the terminal device, where the integrity information includes information for indicating a requirement on positioning integrity.

Integrity may also be referred to as integrity, or may be understood as integrity. The integrity can represent positioning reliability. The integrity information may include the information for indicating the requirement on positioning integrity.

In the technical solutions of this application, the request message sent by an access and mobility management function (access and mobility management function, AMF) device to the LMF device includes the integrity information. The integrity information includes the information for indicating the requirement on positioning integrity. In this way, in a process in which the LMF device obtains a location, the LMF device can determine a positioning requirement based on the integrity information in the request message, to evaluate positioning reliability, and help determine the positioning reliability.

In this application, the LMF device is referred to as an LMF for short, and the AMF device is referred to as an AMF for short.

Optionally, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when a location obtained by the location management function device does not satisfy the requirement on positioning integrity to time when an alert is raised.

In this way, one or more of the alert limit, the integrity risk, and the time to alert indicates/indicate the requirement on positioning integrity, so that in a process in which the LMF obtains the location, the LMF can determine the positioning requirement based on the integrity information in the request message, to evaluate positioning reliability.

Optionally, the integrity information includes a key performance indicator (key performance indicator, KPI) of integrity. The key performance indicator of the integrity indicates an indicator requirement on positioning integrity. The alert limit, the integrity risk, and the time to alert may be understood as KPIs of the integrity. In this way, the key performance indicator of the integrity can more accurately represent the requirement on positioning integrity, so that in a process in which the LMF obtains the location, the LMF can determine the positioning requirement based on the integrity information in the request message, to evaluate positioning reliability.

Optionally, the request message includes quality of service (quality of service, QoS) of positioning, and the integrity information belongs to the QoS. The QoS may further include a positioning requirement, for example, a precision range. In the technical solution of this application, the integrity information is added to the QoS, and the information indicating the requirement on positioning integrity in the integrity information may be used as a positioning quality requirement. In this way, the LMF may select a proper positioning solution based on the QoS, to position the terminal device.

The integrity information may further include a protection level (protection level, PL), where the PL represents a statistical value of the positioning error, and is for checking whether the positioning error is within an alert interval. For example, the alert interval may be an interval in which the positioning error is greater than the alert limit, or the alert interval may be an interval in which the positioning error is greater than or equal to the alert limit. A relationship between the alert interval and the alert limit is not limited in this application. The PL may not be the key performance indicator of the integrity. The request message may not include the PL.

Specifically, a horizontal PL is a statistical value range of a horizontal location error, and a vertical PL is a statistical value range of a vertical location error.

In an LMF-based positioning scenario, in an LMF positioning process, the PL may be calculated. For example, the alert interval is an interval in which the positioning error is greater than the alert limit. The LMF compares the PL with the AL included in the request message. If PL>AL, it indicates that positioning is unavailable and the LMF sends an alert message to the AMF.

In some implementations, that the location management function device positions the terminal device includes:

The location management function device sends a first request to a first network element, where the first request is for requesting a measurement quantity, the measurement quantity includes a measurement quantity for obtaining a protection level, and the protection level represents a statistical value of the positioning error;
the location management function device receives, from the first network element, the measurement quantity for obtaining the protection level; and
the location management function device obtains a location of the terminal device and the protection level.

In this way, the location management function device can obtain the measurement quantity for obtaining the protection level, to obtain the protection level, and determine, based on the protection level, whether positioning is reliable.

Optionally, the first network element is an access network device or the terminal device. In this way, the location management function device can obtain, from the access network device or the terminal device, the measurement quantity for obtaining the protection level.

For example, the first network element is the access network device. The first request may be sent by using a measurement request (measurement request). The access network device sends, to the LMF, the measurement quantity requested by using the first request, by using a measurement response or a measurement report (measurement response/measurement report).

For another example, the first network element is the terminal device. The first request may be sent by using request location information (request location information). The terminal device sends the measurement quantity to the LMF by using provide location information (provide location information).

In some possible implementations, that the location management function device obtains a location of the terminal device and the protection level includes:

The management function device sends request location information to the terminal device, where the request location information is for requesting the terminal device to perform positioning, and the request location information includes the measurement quantity for obtaining the protection level; and
the location management function device receives provide location information from the terminal device.

The provide location information includes the location of the terminal device and at least one of the following: the protection level, a result obtained through comparison between the protection level and the key performance indicator, or an alert message.

In this way, the location management function device can obtain, from the terminal device by using provide location information, the location of the terminal device and information related to the protection level, to determine whether positioning is reliable.

In some implementations, the positioning method further includes: The location management function device determines, with reference to the alert limit and the protection level, whether the alert message needs to be sent, and if yes, the location management function device sends the alert message to an access and mobility management function device.

In this way, the location management function device can determine, with reference to the alert limit and the protection level, whether the alert message needs to be sent, to determine whether positioning is reliable.

In some implementations, that the location management function device positions the terminal device includes: The location management function device sends the integrity information to the terminal device. In this way, the terminal device can perform calculation related to an integrity requirement based on the integrity information, to determine whether positioning is reliable.

In some implementations, the positioning method further includes: The location management function device receives an alert message from the terminal device. In this way, the location management function device can determine, based on the alert message, that positioning is unreliable, and the location management function device may further send the alert message to a client.

In some implementations, the positioning method further includes: The location management function device receives assistance information from the access network device or the terminal device, where the assistance information is for assisting in determining the location of the terminal device and/or determining the protection level. In this way, the location management function device can perform, based on the assistance information, calculation related to positioning reliability, and can determine, in time, whether positioning is reliable.

In some implementations, the positioning method further includes: The location management function device sends assistance information to the terminal device, where the assistance information is for assisting in determining the location of the terminal device and/or determining the protection level. In this way, the terminal device can perform, based on the assistance information, calculation related to positioning reliability, and can determine, in time, whether positioning is reliable.

Optionally, the assistance information includes at least one of the following: information indicating whether a positioning reference signal PRS is available, a PRS error model, a downlink positioning error model, an uplink positioning error model, a measurement error model, a measurement error, and an SRS error model. The downlink positioning error model is used by the terminal device to assist in determining the location during downlink positioning, and the uplink positioning error model is used by the terminal device to assist in determining the location during uplink positioning.

According to a second aspect, this application further provides a positioning method, including: A terminal device receives request location information from a location management function device, where the request location information includes integrity information; and the terminal sends provide location information to the location management function device, where the integrity information includes information for indicating a requirement on positioning integrity.

In the technical solutions of this application, the request location information includes the integrity information. The integrity information includes the information for indicating the requirement on positioning integrity. In this way, in a process in which the terminal device obtains a location, the terminal device can determine a positioning requirement based on the integrity information in the request message, to evaluate positioning reliability, and help determine the positioning reliability.

Optionally, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when a location obtained by the location management function device does not satisfy the requirement on positioning integrity to time when an alert is raised.

In this way, one or more of the alert limit, the integrity risk, and the time to alert indicates/indicate the requirement on positioning integrity, so that in a process in which the LMF obtains the location, the LMF can determine the positioning requirement based on the integrity information in the request message, to evaluate positioning reliability.

Optionally, the integrity information includes a key performance indicator (key performance indicator, KPI) of integrity. The key performance indicator of the integrity indicates an indicator requirement on positioning integrity. The alert limit, the integrity risk, and the time to alert may be understood as KPIs of the integrity. In this way, the key performance indicator of the integrity can more accurately represent the requirement on positioning integrity, so that in a process in which the LMF obtains the location, the LMF can determine the positioning requirement based on the integrity information in the request message, to evaluate positioning reliability.

The integrity information may further include a protection level (protection level, PL), where the PL represents a statistical value of the positioning error, and is for checking whether the positioning error is within an alert interval. For example, the alert interval may be an interval in which the positioning error is greater than the alert limit, or the alert interval may be an interval in which the positioning error is greater than or equal to the alert limit. A relationship between the alert interval and the alert limit is not limited in this application. The PL may not be the key performance indicator of the integrity. The request message may not include the PL.

Specifically, a horizontal PL is a statistical value range of a horizontal location error, and a vertical PL is a statistical value range of a vertical location error.

In an LMF-based positioning scenario, in an LMF positioning process, the PL may be calculated. For example, the alert interval is an interval in which the positioning error is greater than the alert limit. The LMF compares the PL with the AL included in the request message. If PL>AL, it indicates that positioning is unavailable and the LMF sends an alert message to the AMF.

In some implementations, the provide location information includes one or more of the following: a location of the terminal device, a measurement quantity for determining the location of the terminal device, a protection level, a result obtained through comparison between the protection level and the key performance indicator, or an alert message. The protection level represents a statistical value of the positioning error. In this way, the LMF can obtain, by using the provide location information, information related to the protection level, to determine positioning reliability.

In some implementations, the method further includes: The terminal device receives assistance information from the location management function device, where the assistance information is for assisting in determining the location of the terminal device and/or determining the protection level. In this way, the location management function device can perform, based on the assistance information, calculation related to positioning reliability, and can determine, in time, whether positioning is reliable.

Specifically, the assistance information includes at least one of the following: information indicating whether a positioning reference signal PRS is available, a PRS error model, a downlink positioning error model, an uplink positioning error model, a measurement error model, a measurement error, and an SRS error model.

The downlink positioning error model is used by the terminal device to assist in determining the location during downlink positioning, and the uplink positioning error model is used by the terminal device to assist in determining the location during uplink positioning.

According to a third aspect, this application further provides a communication apparatus. The communication apparatus may be but is not limited to an LMF, or the communication apparatus may be deployed in the LMF. The communication apparatus includes:
a receiving unit, configured to receive a request message, where the request message is for requesting to position a terminal device, and the request message includes integrity information of positioning; and
a processing unit, configured to position the terminal device.

The integrity information includes information for indicating a requirement on positioning integrity.

In the technical solutions of this application, the request message includes the integrity information. The integrity information includes the information for indicating the requirement on positioning integrity. In this way, in a process in which the LMF obtains a location, the LMF can determine the positioning requirement based on the integrity information in the request message, to evaluate positioning reliability, and help determine the positioning reliability.

In some implementations, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when a location obtained by the location management function device does not satisfy the requirement on positioning integrity to time when an alert is raised.

In some implementations, the request message includes quality of service QoS, and the integrity information that the QoS includes belongs to the QoS.

In some implementations, the integrity information includes a key performance indicator of integrity.

In some implementations, in the aspect of positioning the terminal device, the processing unit is specifically configured to:
send a first request to a first network element by using a sending unit of the communication apparatus, where the first request is for requesting a measurement quantity, the measurement quantity includes a measurement quantity for obtaining a protection level, and the protection level represents a statistical value of a positioning error;
receive, by using the receiving unit from the first network element, the measurement quantity for obtaining the protection level; and
obtain a location of the terminal device and the protection level.

In some implementations, the first network element is an access network device or the terminal device.

In some implementations, in the aspect of obtaining the location of the terminal device and the protection level, the processing unit is specifically configured to:
send request location information by using the sending unit, where the request location information is for requesting the terminal device to perform positioning, and the request location information includes the measurement quantity for obtaining the protection level; and
receive provide location information from the terminal device by using the receiving unit.

The provide location information includes the location of the terminal device and at least one of the following: the protection level, a result obtained through comparison between the protection level and the key performance indicator, or an alert message.

In some implementations, the processing unit is further configured to:
determine, with reference to the alert limit and the protection level, whether the alert message needs to be sent.

If yes, the location management function device sends the alert message to an access and mobility management function device.

In some implementations, in the aspect of positioning the terminal device by the location management function device, the processing unit is further configured to:
send the integrity information to the terminal device by using the sending unit.

In some implementations, the receiving unit is further configured to:
receive an alert message from the terminal device.

In some implementations, the receiving unit is further configured to:
receive assistance information from the access network device or the terminal device, where the assistance information is for assisting in determining the location of the terminal device and/or determining the protection level.

In some implementations, the sending unit is further configured to:
send assistance information to the terminal device, where the assistance information is for assisting in determining the location of the terminal device and/or determining the protection level.

In some implementations, the assistance information includes at least one of the following: information indicating whether a positioning reference signal PRS is available, a PRS error model, a downlink positioning error model, an uplink positioning error model, a measurement error model, a measurement error, and an SRS error model.

The downlink positioning error model is used by the terminal device to assist in determining the location during downlink positioning, and the uplink positioning error model is used by the terminal device to assist in determining the location during uplink positioning.

It should be understood that explanations, descriptions, and technical effects of the implementations of the first aspect are also applicable to the communication apparatus in the third aspect of this application. Details are not described herein again.

According to a fourth aspect, this application further provides a communication apparatus. The communication apparatus may be a terminal device, or the communication apparatus may be deployed in the terminal device. The communication apparatus includes:
a receiving unit, configured to receive request location information from a location management function device, where the request location information includes integrity information; and
a sending unit, configured to send provide location information to the location management function device.

The integrity information includes information for indicating a requirement on positioning integrity.

In the technical solutions of this application, the request location information includes the integrity information. The integrity information includes the information for indicating the requirement on positioning integrity. In this way, in a process in which the terminal device obtains a location, the terminal device can determine a positioning requirement based on the integrity information in the request message, to evaluate positioning reliability, and help determine the positioning reliability.

In some implementations, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when the location obtained by the location management function device does not satisfy the requirement on positioning integrity to time when an alert is raised.

In some implementations, the integrity information includes a key performance indicator of integrity.

In some implementations, the provide location information includes one or more of the following: a location of the terminal device, a measurement quantity for determining the location of the terminal device, a protection level, a result obtained through comparison between the protection level and the key performance indicator, or an alert message.

The protection level represents a statistical value of the positioning error.

In some implementations, the receiving unit is further configured to receive assistance information from the location management function device, where the assistance information is for assisting in determining the location of the terminal device and/or determining the protection level.

In some implementations, the assistance information includes at least one of the following: information indicating whether a positioning reference signal PRS is available, a PRS error model, a downlink positioning error model, an uplink positioning error model, a measurement error model, a measurement error, and an SRS error model. The downlink positioning error model is used by the terminal device to assist in determining the location during downlink positioning, and the uplink positioning error model is used by the terminal device to assist in determining the location during uplink positioning.

According to a fifth aspect, this application provides a communication device. The communication device is a terminal device or a location management function device, and includes a processor and a memory. The memory is configured to store computer instructions. The processor executes a computer program or the instructions in the memory, so that the method in any one of the implementations of the first aspect or the second aspect is performed.

According to a sixth aspect, this application further provides a communication device. The communication device includes a processor, a memory, and a transceiver. The transceiver is configured to receive a signal or send a signal. The memory is configured to store program code. The processor is configured to invoke the program code from the memory to perform the method in the first aspect or the second aspect. The memory is configured to store a computer program or instructions. The processor is configured to invoke the computer program or the instructions from the memory and run the computer program or the instructions. When the processor executes the computer program or the instructions in the memory, the communication device is enabled to perform any one of the implementations of the method in the first aspect or the second aspect.

Optionally, there are one or more processors, and there are one or more memories.

Optionally, the memory may be integrated with the processor, or the memory and the processor are separately disposed.

Optionally, the transceiver may include a transmitter (transmitter) and a receiver (receiver).

According to a seventh aspect, this application provides an apparatus. The apparatus includes a processor, and the processor is coupled to a memory. When the processor executes a computer program or instructions in the memory, the method in any one of the implementations of the first aspect is performed. Optionally, the apparatus further includes the memory. Optionally, the apparatus further includes a communication interface, and the processor is coupled to the communication interface.

In an implementation, the apparatus is a terminal device. When the communication device is a terminal device, the communication interface may be a transceiver or an input/output interface. Optionally, the transceiver may be a transceiver circuit. Optionally, the input/output interface may be an input/output circuit.

In another implementation, the apparatus is a chip or a chip system. When the apparatus is the chip or the chip system, the communication interface may be an input/output interface, an interface circuit, an output circuit, an input circuit, a pin, a related circuit, or the like on the chip or in the chip system. The processor may alternatively be embodied as a processing circuit or a logic circuit.

According to an eighth aspect, this application provides a communication device. The communication device includes a processor and an interface circuit. The interface circuit is configured to receive code instructions and transmit the code instructions to the processor. The processor runs the code instructions to perform the method in any one of the possible implementations of the first aspect or the second aspect.

According to a ninth aspect, this application provides a system. The system includes the foregoing terminal device and the location management function device.

According to a tenth aspect, this application provides a computer program product. The computer program product includes a computer program (which may also be referred to as code or instructions). When the computer program is run, a computer is enabled to perform the method in any one of the possible implementations of the first aspect or the second aspect.

According to an eleventh aspect, this application provides a computer-readable storage medium. The computer-readable medium stores a computer program (which may also be referred to as code or instructions). When the computer program is run on a computer, the computer is enabled to perform the method in any one of the possible implementations of the first aspect or the second aspect.

According to a twelfth aspect, this application further provides a chip, including a processor and an interface, configured to execute a computer program or instructions stored in a memory, to perform the method in any one of the possible implementations of the first aspect or the second aspect.

### BRIEF DESCRIPTION OF DRAWINGS

To describe technical solutions in embodiments of this application or in a conventional technology more clearly, the following briefly describes the accompanying drawings used in describing embodiments.
FIG. 1 is a diagram of a network architecture of a positioning system according to an embodiment of this application;
FIG. 2 is a diagram of another network architecture of a positioning system according to an embodiment of this application;
FIG. 3 is a schematic flowchart of a positioning technology according to this application;
FIG. 4 is a schematic flowchart of another positioning technology according to this application;
FIG. 5A is a schematic flowchart of a positioning method according to an embodiment of this application;
FIG. 5B is another schematic flowchart of a positioning method according to an embodiment of this application;
FIG. 5C is another schematic flowchart of a positioning method according to an embodiment of this application;
FIG. 5D is another schematic flowchart of a positioning method according to an embodiment of this application;
FIG. 5E is another schematic flowchart of a positioning method according to an embodiment of this application;
FIG. 5F is another schematic flowchart of a positioning method according to an embodiment of this application;
FIG. 5G is another schematic flowchart of a positioning method according to an embodiment of this application;
FIG. 6A is another schematic flowchart of a positioning method according to an embodiment of this application;
FIG. 6B is another schematic flowchart of a positioning method according to an embodiment of this application;
FIG. 7 is another schematic flowchart of a positioning method according to an embodiment of this application;
FIG. 8A is another schematic flowchart of a positioning method according to an embodiment of this application;
FIG. 8B is another schematic flowchart of a positioning method according to an embodiment of this application;
FIG. 9A is another schematic flowchart of a positioning method according to an embodiment of this application;
FIG. 9B is another schematic flowchart of a positioning method according to an embodiment of this application;
FIG. 10 is a schematic structural diagram of a communication apparatus according to an embodiment of this application;
FIG. 11 is another schematic structural diagram of a communication apparatus according to an embodiment of this application;
FIG. 12A is a schematic structural diagram of a communication device according to an embodiment of this application; and
FIG. 12B is a schematic structural diagram of a chip or a chip system according to an embodiment of this application.

### DESCRIPTION OF EMBODIMENTS

The technical solutions according to embodiments of this application are clearly and completely described in the following with reference to the accompanying drawings. In description of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and " second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise stated, "a plurality of" means two or more than two.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a next generation communication system, for example, 6G. The 5G mobile communication system provided in this application includes a non-standalone (non-standalone, NSA) 5G mobile communication system or a standalone (standalone, SA) 5G mobile communication system. The technical solutions provided in this application may be further applied to a future communication system, for example, a sixth generation mobile communication system. Alternatively, the communication system may be a public land mobile network (public land mobile network, PLMN) network, a device-to-device (device-to-device, D2D) communication system, a machine to machine (machine to machine, M2M) communication system, an internet of things (Internet of Things, IoT) communication system, an internet of vehicles communication system, or another communication system.

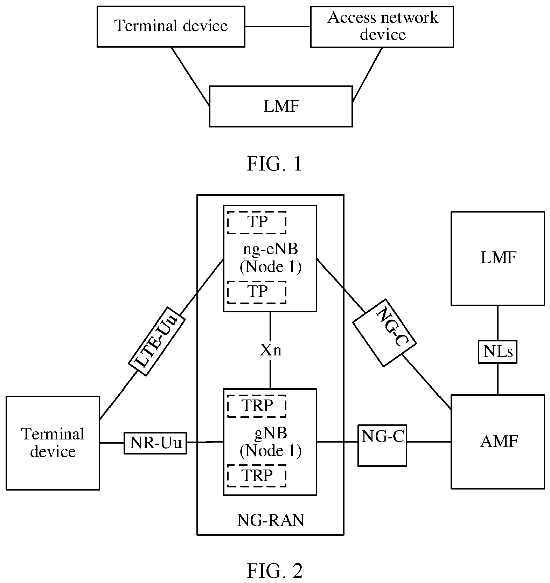

FIG. 1 is a diagram of a network architecture of a positioning system according to an embodiment of this application. As shown in FIG. 1, the positioning system includes a terminal, one or more access network devices (where one access network device is used as an example in FIG. 1), and a location management function (location management function, LMF) device. The terminal, the access network device, or the location management function device may directly communicate with each other, or may communicate with each other through forwarding by another device. This is not specifically limited in embodiments of this application. Although not shown, the positioning system may further include another network element such as a mobility management network element. This is not specifically limited in embodiments of this application.

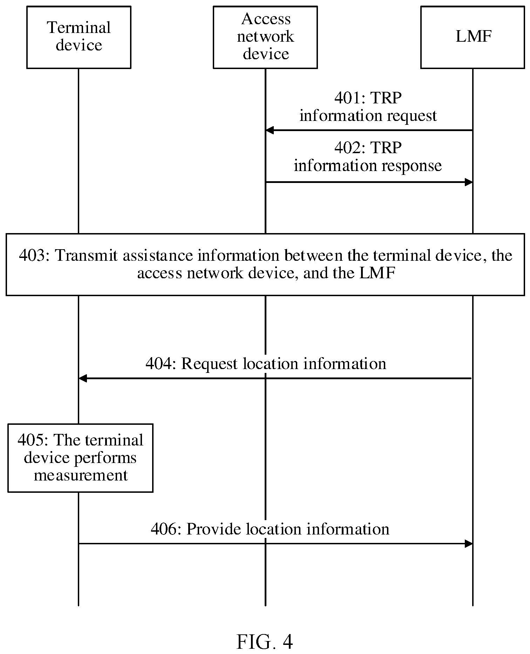

For example, FIG. 2 is a schematic diagram of an architecture of a positioning system to which a terminal positioning method in embodiments of this application is applied in a 5G mobile communication system. As shown in FIG. 2, in the positioning system, a terminal device is connected to a radio access network through an LTE-Uu interface and a next-generation evolved NodeB (next-generation evolved NodeB, ng-eNB), or through an NR-Uu interface and a next-generation NodeB (next-generation NodeB, gNB). The radio access network is connected to a core network through an NG-C interface and an AMF network element. An NG-RAN includes one or more ng-eNBs (where one ng-eNB is used as an example for illustration in FIG. 4), an NG-RAN may include one or more gNBs (where one gNB is used as an example for illustration in FIG. 4), or an NG-RAN may include one or more ng-eNBs and one or more gNBs. The ng-eNB is an LTE base station that accesses a 5G core network, and the gNB is a 5G base station that accesses the 5G core network. The core network includes an access and mobility management function (access and mobility management function, AMF) device and an LMF device. The AMF device is configured to implement a function such as access management, and the LMF device is configured to implement a function such as positioning or positioning assistance. The AMF device is connected to the LMF device through an NLs interface.

In this application, the LMF device is referred to as an LMF for short, and the AMF device is referred to as an AMF for short.

Optionally, the positioning system provided in embodiments of this application is applicable to the foregoing various communication systems. The following uses a 5G mobile communication system as an example. As shown in FIG. 1, a network element or an entity corresponding to the access network device may be a next-generation radio access network (next-generation radio access network, NG-RAN) device in the 5G mobile communication system. A network element or an entity corresponding to the mobility management network element may be an access and AMF device in the 5G mobile communication system. This is not specifically limited in embodiments of this application.

Optionally, the terminal in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved PLMN, or a terminal in a future internet of vehicles. This is not limited in embodiments of this application.

By way of example but not limitation, in embodiments of this application, the terminal may be a mobile phone, a tablet computer, a computer having a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example but not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not merely a hardware device. Moreover, the wearable device implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

Alternatively, in embodiments of this application, the terminal may be a terminal in an internet of things (internet of things, IoT) system. The IoT is an important composition part of information technology development in the future, and has a main technical feature in which things are connected to a network by using a communication technology to implement an intelligent network for human-machine interconnection and thing-thing interconnection. In embodiments of this application, an IoT technology may implement massive connections, deep coverage, and terminal power saving by using, for example, a narrow band (narrow band, NB) technology.

In addition, in embodiments of this application, the terminal may alternatively include a sensor such as an intelligent printer, a train detector, or a gas station, and main functions of the terminal include: collecting data (for some terminals), receiving control information and downlink data from an access network device, sending an electromagnetic wave, and transmitting uplink data to the access network device.

Optionally, the access network device in embodiments of this application may be any communication device that has a wireless transceiver function and that is configured to communicate with the terminal. The access network device includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB, a TRP, or a TP in the 5G system, or one or a group of (including a plurality of antenna panels) antenna panels of a base station in the 5G system. In addition, the access network device may alternatively be a network node included in a gNB or a TP, for example, a BBU or a distributed unit (distributed unit, DU).

In some deployments, the gNB may include a central unit (central unit, CU) and the DU. In addition, the gNB may alternatively include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node.

Optionally, the access network device and the terminal in embodiments of this application may communicate with each other by using a licensed spectrum, may communicate with each other by using an unlicensed spectrum, or may communicate with each other by using both the licensed spectrum and the unlicensed spectrum. The access network device and the terminal may communicate with each other by using a spectrum below 6 gigahertz (gigahertz, GHz), may communicate with each other by using a spectrum above 6 GHz, or may communicate with each other by using both the spectrum below 6 GHz and the spectrum above 6 GHz. Spectrum resources used between the access network device and the terminal device are not limited in embodiments of this application.

Optionally, the terminal device, the access network device, or a location management function device in embodiments of this application may be deployed on land, and include an indoor, outdoor, handheld, or a vehicle-mounted device; may be deployed on water; or may be deployed on an airplane, a balloon and a satellite in the air. An application scenario of the terminal, the access network device, or the location management function device is not limited in embodiments of this application.

Optionally, in embodiments of this application, the terminal device, the access network device, or the location management function device includes a hardware layer, an operating system layer running over the hardware layer, and an application layer running over the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal, the access network device, or a location management function device, or a functional module that can invoke and execute the program in the terminal, the access network device, or the location management function device.

In other words, related functions of the terminal device, the access network device, or the location management function device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

A positioning technology for the terminal device is classified into uplink positioning and downlink positioning. In uplink positioning, the access network device determines a location of the terminal device by measuring a time difference of arrival (UL-TDOA) or an angle of arrival (UL-AoA) of a channel sounding reference signal (Sounding Reference Signal, SRS) of the terminal device arriving at access network devices in a plurality of cells.

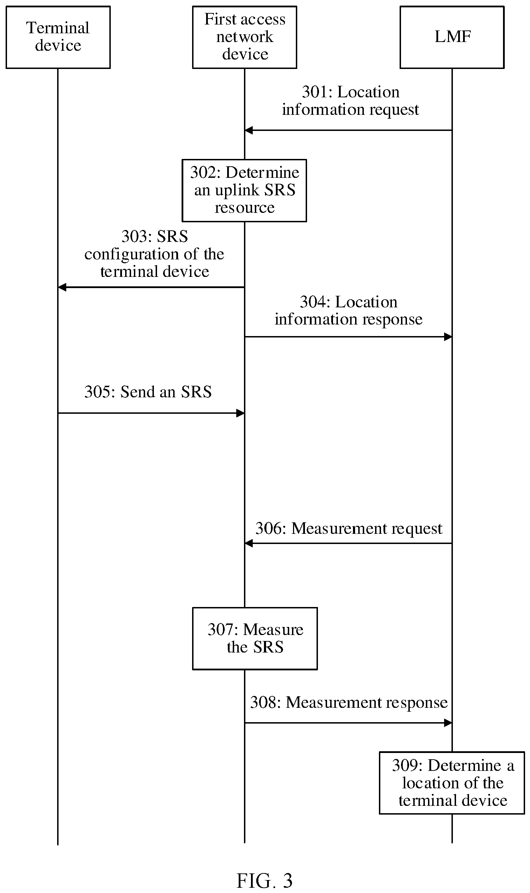

Specifically, in a schematic flowchart shown in FIG. 3, an uplink positioning procedure may include the following steps.

301: An LMF sends a position information request (position information request) to a first access network device, where the position information request is for requesting to configure a terminal to send an SRS.

The first access network device is an access network device connected to the terminal device, and may be understood as a serving-access network device (serving-NG-RAN, S-NG-RAN).

302: The first access network device determines an uplink SRS resource.

303: The first access network device sends an SRS configuration of the terminal device to the terminal device.

304: The first access network device sends a position information response (position information response) to the LMF, where the position information response includes the SRS configuration.

305: The terminal device sends the SRS.

For example, the terminal device may send the SRS through broadcast. It may be understood that both the first access network device connected to the terminal device and a neighbor access network device (neighbor-NG-RAN, N-NG-RAN) may receive the SRS broadcast by the terminal device. The neighbor access network device may be understood as an access network device other than the first access network device near the terminal device.

306: The LMF sends a measurement request to the first access network device, to request to measure the SRS signal, to obtain a measurement result that can be used for positioning the terminal device.

Optionally, the LMF may further send a measurement request to the neighbor access network device, to request to measure the SRS signal.

307: The first access network device measures the SRS.

Optionally, the neighbor access network device may alternatively measure the SRS.

308: The first access network device sends a measurement response to the LMF, where the measurement response includes the measurement result.

Optionally, the neighbor access network device may alternatively send a measurement response to the LMF, and the measurement response includes the measurement result.

309: The LMF determines a location of the terminal device.

In this way, the LMF may determine the location of the terminal device based on the received measurement response.

In a schematic flowchart shown in FIG. 4, in downlink positioning, a terminal device or an LMF may obtain a location of the terminal based on a measurement result obtained by measuring downlink positioning reference signals (positioning reference signals, PRSs) sent by a plurality of access network devices. The downlink positioning may include the following steps.

401: The LMF sends a transmission reception point (transmission reception point, TRP) information request (information request) to a first access network device.

The first access network device is an access network device connected to the terminal device, and may be understood as a serving-access network device (serving-NG-RAN, S-NG-RAN).

Optionally, a neighbor access network device (neighbor-NG-RAN, N-NG-RAN) may alternatively send a TRP information request to the first access network device. The neighbor access network device may be understood as an access network device other than the first access network device near the terminal device.

The TRP request may request configuration information of a downlink positioning reference signal (positioning reference signal, PRS) of the access network device.

402: The first access network device sends a TRP information response (information response) to the LMF.

Optionally, the neighbor access network device may alternatively send a TRP information response to the LMF. The TRP information response includes information such as the configuration information of the PRS and a location of the TRP.

403: Transmit assistance information between the terminal device, the first access network device, and the LMF.

In this step, the assistance information may be sent to the terminal device. The assistance information includes configuration information of a PRS of at least one TRP. Optionally, the neighbor access network device may alternatively participate in transmission of the assistance information.

404: The LMF sends request location information (request location information) to the terminal device, to request the terminal device to measure the PRS.

Specifically, the LMF requests the terminal device to measure the PRS sent by the first access network device and/or the neighbor access network device.

405: The terminal device measures the PRS.

406: The terminal device sends provide location information (provide location information) to the LMF, where the provide location information includes a result of the PRS measured by the terminal device.

The downlink positioning may be classified into LMF-based positioning and terminal device-based positioning. In an LMF-based positioning solution, the LMF determines the location of the terminal device. The terminal device sends the measurement result to the LMF by using the provide location information, and the LMF determines the location of the terminal device.

In a terminal device-based positioning solution, the terminal device determines the location of the terminal device based on the measurement result, and sends the location of the terminal device to the LMF by using the provide location information.

The following describes in detail the technical solutions in embodiments of this application with reference to the positioning method in embodiments of this application.

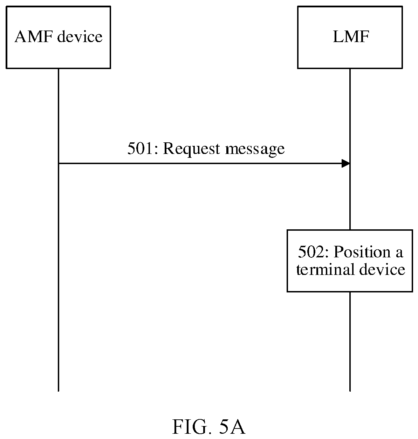

In a schematic flowchart in FIG. 5A, the positioning method in an embodiment of this application may include the following steps.

501: An AMF sends a request message to an LMF, to request a location of a terminal device or request to position the terminal device.

The request message may be an LMF location determine location request (Nlmf location determine location request). The request message includes positioning integrity (integrity) information.

Integrity may also be referred to as integrity, or may be understood as integrity. The integrity can represent positioning reliability. Integrity information may include information for indicating a requirement on positioning integrity.

Optionally, the request message includes quality of service (quality of service, QoS) of positioning, and the QoS includes integrity information of positioning. The QoS may further include a positioning requirement, for example, a precision range. In the technical solution of this application, the integrity information is added to the QoS, and the information indicating the requirement on positioning integrity in the integrity information may be used as a positioning quality requirement. In this way, the LMF may select a proper positioning solution based on the QoS, to position the terminal device.

The integrity information includes at least one of the following:
an alert limit (alert limit, AL), where the alert limit represents a limit value of an acceptable positioning error;
an integrity risk (integrity risk, IR), where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert (time to alert, TTA), where the time to alert represents allowed time from time when positioning is unavailable to time when an alert is raised. That positioning is unavailable means that positioning of the terminal does not satisfy the requirement of integrity.

In this way, one or more of the alert limit, the integrity risk, and the time to alert indicates/indicate the requirement on positioning integrity, so that in a process in which the LMF obtains the location of the terminal device, the LMF can determine the positioning requirement based on the integrity information in the request message, to evaluate positioning reliability.

Optionally, the integrity information includes a key performance indicator (key performance indicator, KPI) of the integrity. The key performance indicator of the integrity indicates an indicator requirement on positioning integrity. The alert limit, the integrity risk, and the time to alert may be understood as KPIs of the integrity. In this way, the key performance indicator of the integrity can more accurately represent the requirement on positioning integrity, so that in a process in which the LMF obtains the location, the LMF can determine the positioning requirement based on the integrity information in the request message, to evaluate positioning reliability.

502: The LMF positions the terminal device.

It should be understood that positioning solutions may be classified into LMF-based positioning and terminal device-based positioning. In an LMF-based positioning scenario, the LMF determines the location of the terminal device. In the terminal device-based positioning, after determining the location of the terminal device, the terminal device sends the location of the terminal device to the LMF.

In the technical solutions of this application, the request message sent by the AMF to the LMF includes the integrity information. The integrity information includes the information for indicating the requirement on positioning integrity. In this way, in a process in which the LMF obtains a location, the LMF can determine the positioning requirement based on the integrity information in the request message, to evaluate positioning reliability, and help determine positioning reliability.

The integrity information may further include a protection level (protection level, PL), where the PL represents a statistical value of the positioning error, and is for checking whether the positioning error is within an alert interval. For example, the alert interval may be an interval in which the positioning error is greater than the alert limit, or the alert interval may be an interval in which the positioning error is greater than or equal to the alert limit. A relationship between the alert interval and the alert limit is not limited in this application. The PL may not be the key performance indicator of the integrity. The request message may not include the PL.

Specifically, a horizontal PL is a statistical value range of a horizontal location error, and a vertical PL is a statistical value range of a vertical location error.

In the LMF-based positioning scenario, the PL can be calculated during LMF positioning. For example, the alert interval is an interval in which the positioning error is greater than the alert limit. The LMF compares the PL with the AL included in the request message. If PL>AL, it indicates that positioning is unavailable and the LMF sends an alert message to the AMF.

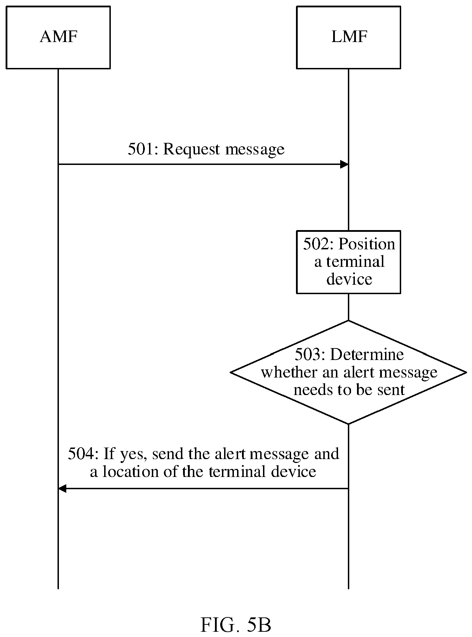

In a schematic flowchart in FIG. 5B, the positioning method further includes the following steps.

503: The LMF determines whether the alert message needs to be sent.

Specifically, the LMF may obtain the alert interval based on the AL, and determine whether the PL is within the alert interval. If the PL is within the alert interval, the LMF may determine that the alert message needs to be sent; or if the PL is not within the alert interval, the LMF may determine that the alert message does not need to be sent.

For example, the alert interval is an interval in which PL>AL. The LMF compares the PL with the AL included in the request message. If PL>AL, the LMF may determine that the alert message needs to be sent. If PL≤AL, the LMF may determine that the alert message does not need to be sent.

504: If yes, the LMF sends the alert message to the AMF.

It may be understood that, if the PL is within the alert interval, it may be considered that positioning is unreliable. In this way, when the PL is within the alert interval, the LMF sends the alert message to the AMF, to notify the AMF in time that positioning is unreliable.

Further, the AMF may send the alert message to a client (Client) by using a gateway mobile location center (gateway mobile location center, GMLC). In other words, the AMF may send the alert message to the GMLC, and the GMLC may further send the alert message to the client.

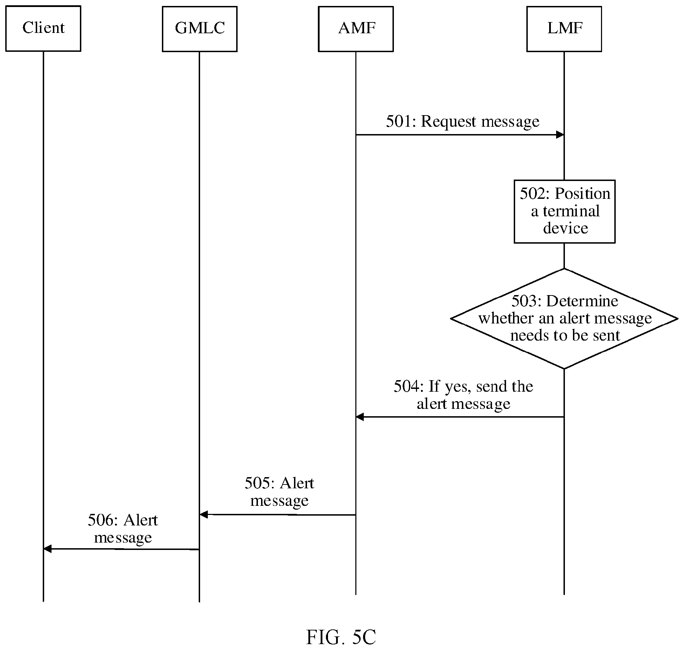

In a schematic flowchart in FIG. 5C, the positioning method further includes the following steps.

505: The AMF sends the alert message to the GMLC.

506: The GMLC sends the alert message to the client.

In this way, a user of the client can learn in time, based on the alert message, that positioning is unreliable, and it is also convenient for the user to take countermeasures in time.

In some other optional embodiments, the AMF may send the alert message to the terminal device.

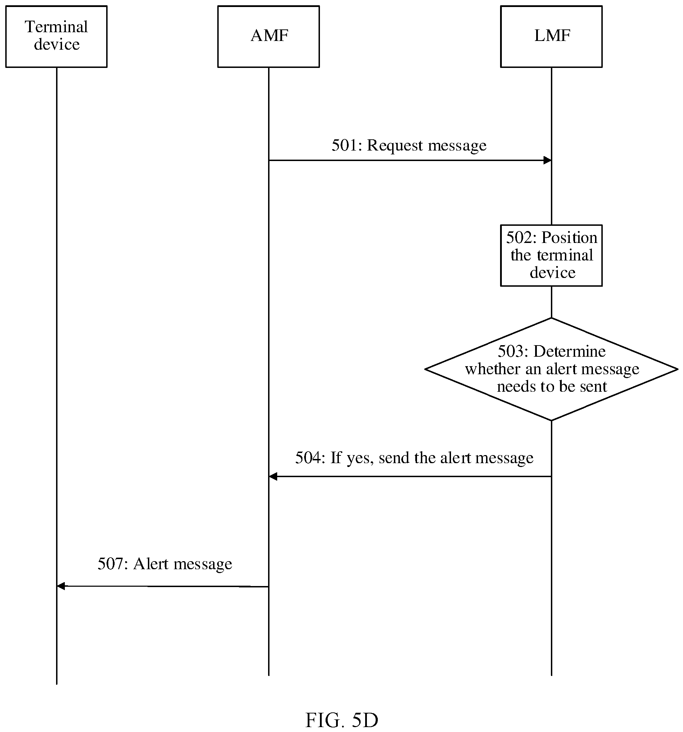

In a schematic flowchart in FIG. 5D, the positioning method further includes the following steps.

507: The AMF sends the alert message to the terminal device.

In this way, a user of the terminal device can learn in time, based on the alert message, that positioning is unreliable, and it is also convenient for the terminal device or the user to make a related response in time.

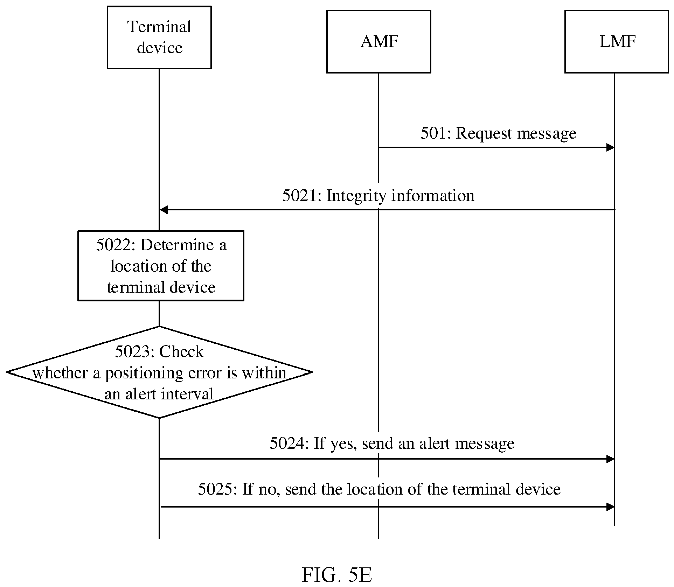

Based on a schematic flowchart shown in FIG. 5E, in the terminal device-based positioning scenario, step 502 may include the following steps.

5021: The LMF sends the integrity information to the terminal device.

The integrity information sent by the LMF to the terminal device may include the KPI of the integrity.

For example, in a positioning process, the LMF may send request location information to the terminal device. Optionally, the LMF may further send a provide assistance data message to the terminal device.

Specifically, the integrity information may be carried in the request location information (request location information) and/or a provide assistance data (provide assistance data) message.

In a possible implementation, the request location information includes the integrity information, but the provide assistance data message does not include the integrity information.

In another possible implementation, the provide assistance data message includes the integrity information, but the request location information does not include the integrity information.

In still another possible implementation, the request location information includes a part of the integrity information, but the provide assistance data message includes another part of the integrity information.

Optionally, the provide assistance data message may further include assistance information for assisting in determining the location of the terminal device, for example, configuration information of a PRS.

5022: The terminal device determines the location of the terminal device.

Specifically, the terminal device may measure the PRS and obtain the location of the terminal device based on a measurement result, and may further obtain the PL.

For example, the terminal device may determine the location of the terminal device based on a measurement quantity measured for positioning, and determine the PL. The PL may be obtained based on one or more of the measurement quantity measured by the terminal device, the location of the terminal device, or assistance information provided by another LMF.

Optionally, the positioning method may further include the following steps.

5023: The terminal device checks whether the positioning error is within the alert interval based on the PL.

5024: If yes, the terminal device sends the alert message to the LMF.

For example, the alert interval may be an interval in which the positioning error is greater than the alert limit. The terminal device may compare the PL with the AL in the integrity information. If PL>AL, it indicates that the location is unavailable, and the alert message is sent to the LMF. The LMF may further send the alert message to the AMF and/or the client. Alternatively, the terminal device may send the alert message and the location of the terminal device to the LMF.

It should be understood that, in addition to comparing the AL with the PL, there may be another solution for determining whether to raise the alert. For example, whether to raise the alert may be determined based on abnormality of the measurement quantity. Specifically, if a quantity of abnormal measurement quantities is greater than a specified quantity, the alert message may be sent.

The terminal device may send provide location information (provide location information) to the LMF, where the provide location information includes the location of the terminal device and the alert message.

Optionally, the alert message may include at least one of a level of an unreliable location and a PL. In this way, the LMF can obtain positioning integrity more accurately.

5025: If no, the terminal device sends the location information of the terminal device to the LMF.

The terminal device may send the provide location information to the LMF, where the provide location information includes the location of the terminal device. In this way, in the terminal device-based positioning scenario, the terminal device can also obtain the integrity information from the LMF, and determine, based on the integrity information, whether the alert message needs to be sent, so that the alert is raised in time when the positioned location is unreliable, thereby improving positioning reliability in the terminal device-based positioning scenario.

Optionally, the alert message may further include at least one of a level of an unreliable location or a PL. In this way, the LMF may more accurately determine, based on the alert message, a degree of unreliability of the positioned location, and may correspondingly adjust the positioning solution, to obtain a more accurate location.

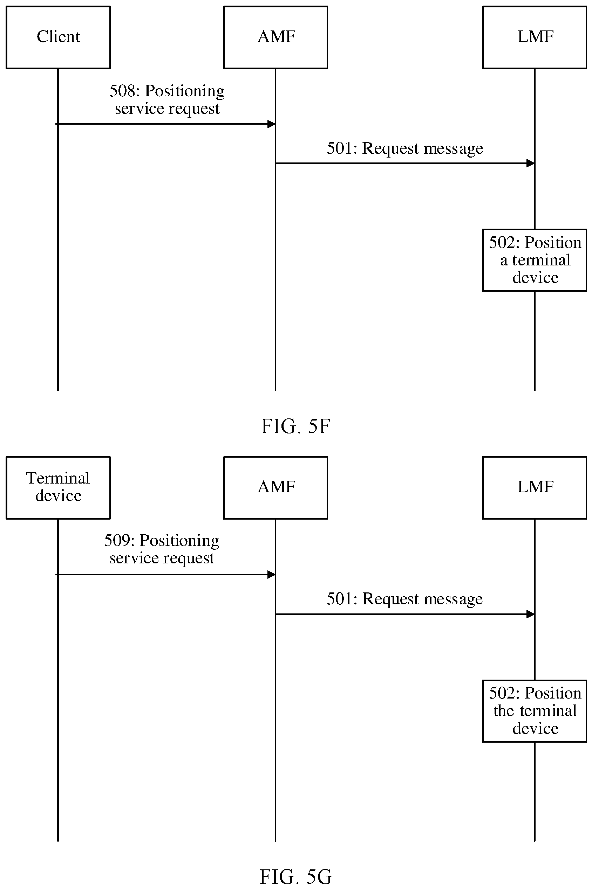

Optionally, as shown in FIG. 5F, before step 501, the positioning method may further include the following steps.

508: The client sends a positioning service request to the AMF, where the positioning service request is for requesting positioning.

The positioning service request includes the integrity information of positioning, or the positioning service request includes QoS of positioning, where the QoS includes the integrity information of positioning. Specifically, the positioning service request may be sent by the client to the AMF by using the GMLC.

In this way, the client may include the integrity information in the positioning service request sent to the AMF, and then the AMF sends the integrity information to the LMF, so that the LMF or the terminal device evaluates positioning reliability based on the integrity information.

It should be understood that the embodiment corresponding to FIG. 5F may be implemented separately, or may be implemented in combination with any one of the foregoing embodiments corresponding to FIG. 5A to FIG. 5E.

Optionally, in a schematic flowchart shown in FIG. 5G, before step 501, the positioning method may further include the following steps.

509: The terminal device sends a positioning service request to the AMF, where the positioning service request is for requesting positioning. The positioning service request includes the integrity information of positioning; or the positioning service request includes QoS of positioning, where the QoS includes the integrity information of positioning.

In this way, the terminal device may include the integrity information in the positioning service request sent to the AMF, and then the AMF sends the integrity information to the LMF, so that the LMF or the terminal device evaluates positioning reliability based on the integrity information.

It should be understood that the embodiment corresponding to FIG. 5G may be implemented separately, or may be implemented in combination with any one of the foregoing embodiments corresponding to FIG. 5A to FIG. 5E.

In some embodiments, when providing the measurement result to the LMF, a device for positioning measurement includes related information for assisting in determining whether positioning is reliable. For example, when providing the measurement result to the LMF, the device for positioning measurement includes the measurement quantity for determining the PL. In this way, a device for determining the location of the terminal device can obtain the measurement quantity for assisting in determining the PL, to determine the PL and determine whether positioning is reliable. Therefore, whether positioning is reliable can be better evaluated, to improve positioning reliability. The LMF may further determine, based on the PL, whether the alert message needs to be sent, to give a prompt in time by using the alert message when positioning is unreliable. The device for positioning measurement is a device for measuring the positioning information. The device for positioning measurement may be a terminal device, or may be an access network device.

It can be learned from the foregoing descriptions that positioning technologies are classified into uplink positioning and downlink positioning. In an uplink positioning scenario, a device for positioning measurement is an access network device. In a downlink positioning scenario, a device for positioning measurement is a terminal device.

The following separately describes transmission solutions of a measurement quantity in an uplink positioning scenario and a downlink positioning scenario with reference to a positioning method.

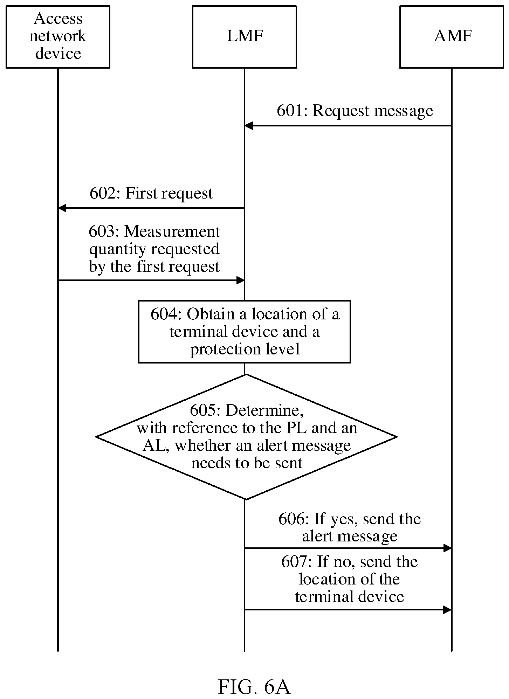

In a schematic flowchart shown in FIG. 6A, in an uplink positioning scenario, the positioning method includes the following steps.

601: An AMF sends a request message to an LMF.

For related descriptions and supplementary descriptions of step 601, refer to related descriptions of step 501 in the foregoing embodiment.

602: The LMF sends a first request to an access network device, where the first request is for requesting a measurement quantity, and the measurement quantity requested by using the first request for measurement includes a measurement quantity for assisting in determining a protection level.

It should be understood that the first request is for requesting to obtain one or more measurement quantities, and the one or more measurement quantities include a measurement quantity for obtaining the protection level, and may further include another measurement quantity related to integrity. The another measurement quantity related to the integrity refers to a measurement quantity other than the measurement quantity that is for obtaining the protection level and that is related to the integrity.

Optionally, the measurement quantity requested by using the first request further includes a measurement quantity for obtaining a location of a terminal device.

603: The access network device sends, to the LMF, the measurement quantity requested by using the first request for measurement.

The access network device sends, based on the first request, to the LMF, the measurement quantity requested by using the first request for measurement. It may be understood that the measurement quantity sent by the access network device to the LMF is a measurement result obtained after measurement.

The first request may be sent by using a measurement request (measurement request). The access network device sends, to the LMF, the measurement quantity requested by using the first request, by using a measurement response or a measurement report (measurement response/measurement report).

604: The LMF obtains the location of the terminal device and the protection level.

In an LMF-based positioning scenario, the LMF may determine the location of the terminal device and the PL based on the measurement quantity fed back by the access network device.

In a terminal device-based positioning scenario, the LMF may receive the location of the terminal device and the protection level from the terminal device.

605: The LMF determines, with reference to the PL and an AL, whether an alert message needs to be sent.

Specifically, the LMF may obtain an alert interval based on the AL, and determine whether the PL is within the alert interval. If the PL is within the alert interval, the LMF may determine that the alert message needs to be sent; or if the PL is not within the alert interval, the LMF may determine that the alert message does not need to be sent.

For example, the alert interval is an interval in which PL>AL. The LMF compares the PL with the AL included in the request message. If PL>AL, the LMF may determine that the alert message needs to be sent. If PL≤AL, the LMF may determine that the alert message does not need to be sent.

606: If yes, the LMF sends the alert message to the AMF.

Optionally, the LMF may further send the location of the terminal device to the AMF.

607: If no, the LMF sends the location of the terminal device to the AMF.

In this way, in the uplink positioning scenario, the access network device sends, to the LMF, the measurement quantity for obtaining the PL, so that the LMF can obtain the PL based on the measurement quantity provided by the access network device, and when the PL is within the alert interval, can determine that positioning is unreliable and send the alert message to the AMF in time.

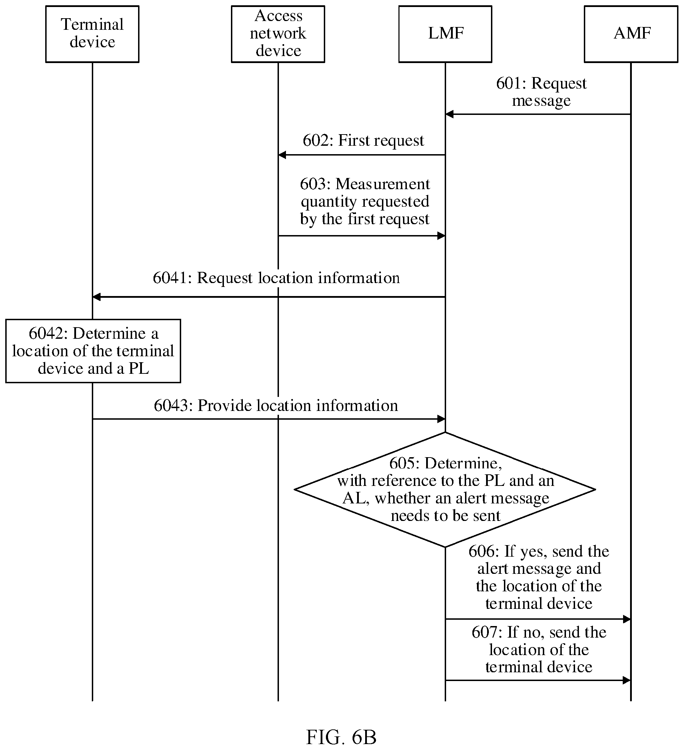

In a schematic flowchart shown in FIG. 6B, in the terminal device-based positioning scenario, step 604 includes the following steps.

6041: The LMF sends request location information (request location information) to the terminal device, where the request location information includes the measurement quantity.

The measurement quantity is the measurement quantity received by the LMF from the access network device. For related descriptions of the measurement quantity, refer to the embodiment corresponding to FIG. 6A. Details are not described herein again.

Correspondingly, the terminal device receives the request location information from the LMF.

6042: The terminal device determines the location of the terminal device and the PL.

The terminal device may determine the location of the terminal device and the PL based on the received measurement quantity and/or a measurement quantity obtained by the terminal.

It should be understood that the measurement quantity obtained by the terminal device may be, for example, but is not limited to, a measurement quantity that is obtained by the terminal device through measurement and that is for determining the PL.

6043: The terminal device sends provide location information (provide location information) to the LMF, where the provide location information includes a location of the terminal device and the PL corresponding to the location.

In this way, the LMF may obtain the location of the terminal device and the PL from the terminal device, and determine, based on the PL, whether the alert message needs to be sent, that is, can determine whether positioning is reliable.

Optionally, the terminal device can also obtain, based on the PL and the AL, a result indicating whether the alert message needs to be sent, and send, to the LMF, the result indicating whether the alert message needs to be sent. The LMF determines, based on the result, whether the alert message needs to be sent. Alternatively, when determining, based on the location of the terminal device and the PL, that the alert message needs to be sent, the terminal device sends the alert message to the LMF.

For a solution in which the terminal device determines whether the alert message needs to be sent, refer to the embodiment corresponding to FIG. 5E. Details are not described herein again.

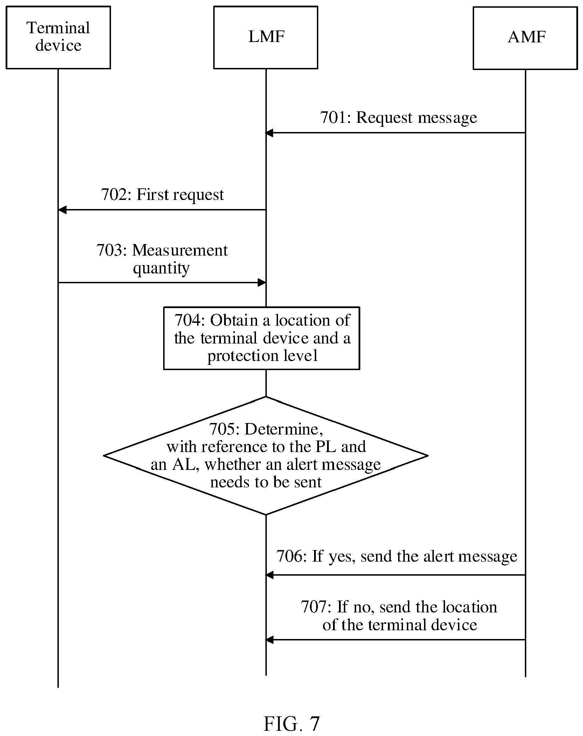

As shown in FIG. 7, in some other embodiments, the positioning method may include the following steps.

701: An AMF sends a request message to an LMF.

For related explanations and descriptions of step 701, refer to the related descriptions of step 501 in the embodiment corresponding to FIG. 5A. Details are not described herein again.

702: The LMF sends a first request to a terminal device, where the first request is for requesting a measurement quantity, and the measurement quantity requested by using the first request for measurement includes a measurement quantity for assisting in determining a protection level.

It should be understood that the first request is for requesting to obtain one or more measurement quantities, and the one or more measurement quantities include a measurement quantity for assisting in determining the PL, and may further include another measurement quantity related to integrity. Optionally, in an LMF-based positioning scenario, the one or more measurement quantities further include a measurement quantity for determining a location of the terminal device, for example, a measurement quantity for measuring a downlink positioning reference signal, such as reference signal received power (reference signal received power, RSRP), an angle of arrival (angle of arrival, AoA), and a time difference of arrival (time difference of arrival, TDOA).

703: The terminal device sends, to the LMF, a measurement quantity for obtaining the PL.

The terminal device performs measurement, and obtains the measurement quantity requested by using the first request for measurement.

The first request may be sent by using request location information (request location information). The terminal device sends the measurement quantity to the LMF by using provide location information (provide location information).

In the LMF-based positioning scenario, the terminal device may send, to the LMF, the measurement quantity that is measured and that is requested by using the first request. The measurement quantity requested by using the first request includes the measurement quantity for assisting in determining the PL and the measurement quantity for determining the location of the terminal device.

In a terminal device-based positioning scenario, the terminal device may perform measurement based on the first request, and an obtained measurement result includes the measurement quantity for determining the PL and the measurement quantity for determining the location of the terminal device. Specifically, the terminal device measures a PRS from an access network device. The terminal device determines the location of the terminal device based on the measurement quantity for determining the location of the terminal device, and sends, to the LMF, the location of the terminal device and the measurement quantity for determining the PL. Alternatively, the terminal device determines the location of the terminal device and the PL based on the measurement result, and then the terminal device sends the location of the terminal device and the PL to the LMF. Alternatively, the terminal device determines the location of the terminal device and the PL based on the measurement result, and determines whether an alert message is sent. If yes, the terminal device sends the location of the terminal device and the alert message to the LMF. If no, the terminal device sends the location of the terminal device to the LMF.

704: The LMF obtains the location of the terminal device and the protection level.

In the LMF-based positioning scenario, the LMF receives, from the terminal device, the measurement quantity for assisting in determining the PL and the measurement quantity for determining the location of the terminal device. The location of the terminal device is determined based on the measurement quantity for determining the location of the terminal device. The LMF may further determine the PL based on the location of the terminal device, the measurement quantity for assisting in determining the PL, or one or more of measurement quantities for assisting in determining the PL.

In the terminal device-based positioning scenario, the LMF receives the location from the terminal device and the measurement quantity for assisting in determining the PL. The LMF may further determine the PL based on the received location of the terminal device and/or the measurement quantity.

Optionally, in the terminal device-based positioning scenario, the LMF may alternatively receive the location and the PL from the terminal device.

705: The LMF determines, with reference to the PL and an AL, whether the alert message needs to be sent.

For a solution in which the LMF determines whether the alert message needs to be sent, refer to the embodiment corresponding to FIG. 6A. Details are not described herein again.

706: If yes, the LMF sends the alert message to the AMF.

Optionally, the LMF may further send the location of the terminal device to the AMF.

707: If no, the LMF sends the location of the terminal device to the AMF.

In this way, in a downlink positioning scenario, the terminal device sends, to the LMF, the measurement quantity for obtaining the PL, so that the LMF can obtain the PL based on the measurement quantity provided by the access network device, and when the PL is within an alert interval, can determine that positioning is unreliable and send the alert message to the AMF in time.

Optionally, in the terminal device-based positioning scenario, the LMF receives the location and the alert message from the terminal device. In other words, in the terminal device-based positioning scenario, the terminal device may determine the PL, and determine, based on the PL and the AL, whether the alert message needs to be sent. If yes, the terminal device sends the location of the terminal device and the alert message to the LMF.

Optionally, the terminal device may further send, to the LMF, the another measurement quantity related to the integrity. This can help the LMF better determine whether the alert message needs to be sent. The another measurement quantity related to the integrity refers to a measurement quantity other than the measurement quantity that is for obtaining the protection level and that is related to the integrity.

In some embodiments, the LMF and the terminal device may further obtain assistance information related to the integrity. The assistance information related to the integrity may be for but is not limited to assisting in determining the location of the terminal device and/or determining the protection level.

For example, in the terminal device-based positioning scenario, the LMF sends first assistance information to the terminal device, where the first assistance information is for assisting in determining the location of the terminal device and/or determining the protection level. In this way, the terminal device can obtain, from the first assistance information, information for assisting in determining the location of the terminal device and/or determining the protection level, so that the location of the terminal device and/or the protection level can be better determined.

For another example, in the LMF-based positioning scenario, the LMF may receive second assistance information from the terminal device or the access network device. The LMF device can obtain, from the second assistance information, the information for assisting in determining the location of the terminal device and/or determining the protection level, so that the location of the terminal device and/or the protection level can be better determined.

It should be understood that, in this application, the first assistance information and/or the second assistance information may also be referred to as integrity assistance data (integrity assistance data), assistance data related to integrity, or the like. Names of the first assistance information and the second assistance information are not limited in this application.

Specifically, the first assistance information may include but is not limited to one or more of the following: information indicating whether the PRS is available, a PRS error model, a measurement error model, an error source (error source), a threat model (threat model), and a failure mode (failure mode). It should be understood that, in this application, the first assistance information may alternatively include other information for assisting in determining the location and/or determining the protection level in addition to the foregoing listed plurality of pieces of information. This is not limited in this application that the first assistance information includes only one or more of the foregoing listed information.

The second assistance information may include one or more of the following: information indicating whether the PRS is available, a PRS error model, a downlink positioning error model, an uplink positioning error model, a measurement error model, a measurement error, and an SRS error model.

The downlink positioning error model is used by the terminal device to assist in determining the location during downlink positioning. The uplink positioning error model is used by the terminal device to assist in determining the location during uplink positioning. It should be understood that, in this application, the second assistance information may alternatively include other information for assisting in determining the location and/or determining the protection level in addition to the foregoing listed plurality of pieces of information. This is not limited in this application that the second assistance information includes only one or more of the foregoing listed information.

The error source can assist in determining the PL. The error source may be obtained in the following manner: defining an equivalent user condition by using prior knowledge of the error source, to replicate the user condition and an environment; and then determining distribution of an error or the distribution of the error source by using an error model. The PL is determined based on the distribution of the error or the distribution of the error source.

The threat model describes all known conditions that may cause a real error to exceed a predicted integrity range. The threat model can be defined as an expected event that a system protects a user from being affected, and a condition that provides a reliable security integrity range during this period. Specifically, the threat model describes a specific nature, degree, and possibility of a threat. The threat model comprehensively describes all proper conditions. A scope of the threat for the threat model is limited.

The failure mode may be defined as a specific manner in which a fault occurs in terms of a fault of a part, component, function, device, subsystem, or system that are investigated. It should be understood that the failure mode refers to an error (for example, PL>AL) that may cause a fault. The error refers to a change or a deviation from an original value and becomes a fault when a specified limit is exceeded. In a failure mode of positioning integrity, the fault refers to an integrity fault.

The following separately describes a solution in which the terminal device receives the first assistance information and a solution in which the LMF receives the second assistance information.

For example, refer to FIG. 4. In a downlink positioning scenario, the LMF may send the first assistance information to the terminal device by using a provide assistance data (provide assistance data) message in step 403 or request location information (request location information) corresponding to step 404. In other words, the terminal device receives the first assistance information from the LMF by using the request location information.

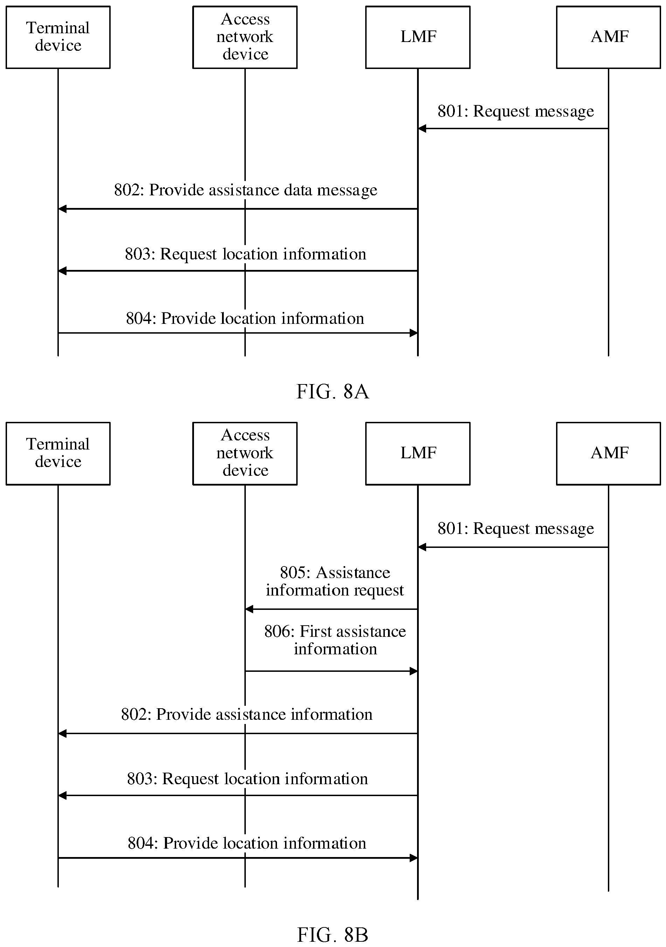

Specifically, in a schematic flowchart shown in FIG. 8A, in some possible implementations, the positioning method may include the following steps.

801: An AMF sends a request message to an LMF.

For related explanations and descriptions of step 801, refer to the related descriptions of step 501 in the embodiment corresponding to FIG. 5A. Details are not described herein again.

802: The LMF sends a provide assistance data (provide assistance data) message to a terminal device.

It should be understood that step 802 is performed after step 801, and is not limited to that step 802 is performed immediately after step 801. After step 801 and before step 802, the positioning method may further include another step. For example, after step 801 and before step 802, the LMF may send a transmission reception point (Transmission Reception Point, TRP) information request (information request) to an access network device, and the access network device may send a TRP information response (information response) to the LMF.

803: The LMF sends request location information (request location information) to the terminal device.

804: The terminal device sends provide location information to the LMF.

At least one of the provide assistance data message and the request location information includes first assistance information. The first assistance information is for assisting in determining a location of the terminal device and/or determining a protection level. For example, one or more of the provide assistance data message and the request location information include a radio access technology (radio access technology, RAT) real-time integrity (real-time integrity) information element, and the RAT real-time integrity information element includes assistance information.

It should be understood that, in this application, only the provide assistance data message may include the first assistance information, and the request location information does not include the first assistance information; only the request location information may include the first assistance information, and the provide assistance data message does not include the first assistance information; or both the request location information and the provide assistance data message may include the first assistance information. When both the request location information and the provide assistance data message include the first assistance information, the request location information and the provide assistance data message may include the same first assistance information, or the request location information includes a part of the first assistance information, and the provide assistance data message includes the other part of the first assistance information.

In this way, in a terminal device-based positioning scenario, the terminal device can obtain an abundant supply of assistance information to assist the terminal device in determining the location of the terminal device and assist the terminal device in determining the PL for positioning, so that the terminal device can determine in time whether the location of the terminal device is reliable, and send an alert message in time when positioning is unreliable, to better ensure positioning reliability.

Optionally, before step 802, the LMF may obtain the first assistance information from the access network device. Specifically, in a schematic flowchart shown in FIG. 8B, before step 802, the positioning method may further include the following steps.

805: The LMF sends an assistance information request to the access network device.

The assistance information request is for requesting the first assistance information.

806: The access network device sends the first assistance information to the LMF.

For example, in step 805, the LMF may send the TRP information request (information request) to the access network device, where the TRP information request includes the assistance information request, or the TRP request is for requesting the first assistance information. In step 806, the access network device may send the TRP information response (information response) to the LMF, where the TRP information response includes the first assistance information. In this way, the LMF obtains the first assistance information from the access network device by using the TRP information request and the TRP information response, to better adapt to an existing positioning procedure.

In some other embodiments, in an LMF-based positioning scenario, the LMF may receive second assistance information from the terminal device or the access network device. The LMF device can obtain, from the second assistance information, information for assisting in determining the location of the terminal device and/or determining the protection level, so that the location of the terminal device and/or the protection level can be better determined.

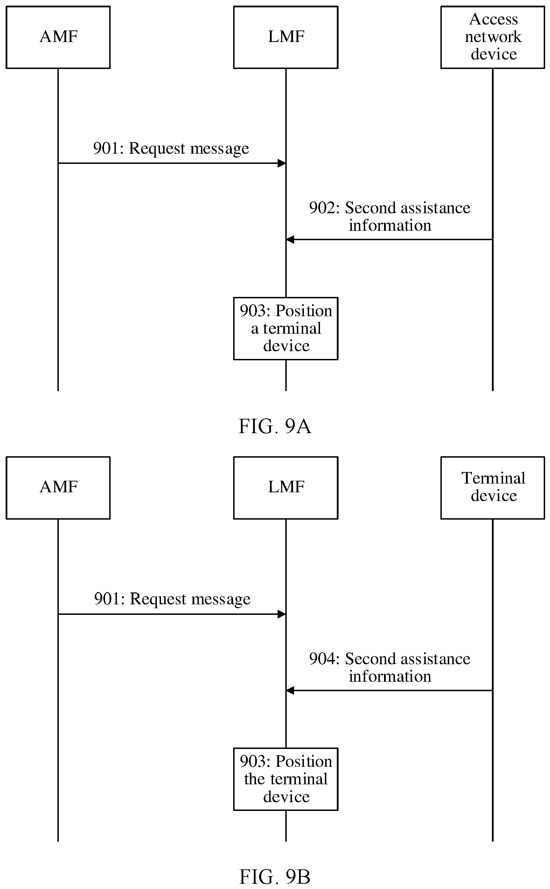

In a schematic flowchart in FIG. 9A, the positioning method includes the following steps.

901: An AMF sends a request message to an LMF.

902: An access network device sends second assistance information to the LMF.

Correspondingly, the LMF receives the second assistance information from the access network device.

For example, in an uplink positioning scenario, the LMF may receive the second assistance information from the access network device by using a location information response. Specifically, the location information response sent by a first access network device to the LMF includes the second assistance information. In this way, the LMF receives the second assistance information from the access network device by using the location information response, to better adapt to an existing positioning procedure.

Optionally, before the access network device sends the location information response to the LMF, the LMF sends a location information request to the access network device. The location information request may request the second assistance information. In this way, the access network device may include, based on the location information request, the second assistance information in the location information response sent to the LMF. Alternatively, the location information request may not request the second assistance information. Alternatively, the access network device may include the second assistance information in the location information response sent to the LMF.

Optionally, the second assistance information in the location information response may include but is not limited to an SRS error model.

For another example, in the uplink positioning scenario, the LMF may further receive the second assistance information from the access network device by using a measurement response. Specifically, the measurement response sent by the access network device to the LMF includes the second assistance information. In this way, the LMF receives the second assistance information from the access network device by using the measurement response, to better adapt to an existing positioning procedure.

Optionally, the LMF may send a measurement request to the access network device before the access network device sends the measurement response to the LMF, and request the second assistance information in the measurement request sent to the access network device. In this way, the access network device may include, based on the measurement request, the second assistance information in the measurement response sent to the LMF. Alternatively, the measurement request may not request the second assistance information. Alternatively, the access network device may include the second assistance information in the measurement response sent to the LMF.

Optionally, the second assistance information in the measurement response may include but is not limited to one or more of a measurement error model and a measurement error.

For another example, in a downlink positioning scenario, the LMF may receive the second assistance information from the access network device by using a TRP information response. Refer to FIG. 4. The TRP information response sent by the access network device to the LMF includes the second assistance information. In this way, the LMF obtains the second assistance information from the access network device by using a TRP information request and the TRP information response, to better adapt to an existing positioning procedure.

Optionally, before the access network device sends the TRP information response to the LMF, the LMF may send the TRP information request to the access network device, and the TRP information request may request the second assistance information from the access network device. In this way, the access network device may include, based on the TRP information request, the second assistance information in the TRP information response sent to the LMF. Alternatively, the TRP information request may not request the second assistance information. Alternatively, the access network device may include the second assistance information in the TRP information response sent to the LMF.

Optionally, the second assistance information in the TRP information response may include but is not limited to one or more of a PRS error model and an error model in downlink positioning.

903: The LMF positions the terminal device.

Solutions in which the LMF positions the terminal device include a terminal device-based positioning solution and an LMF-based positioning solution. For a specific solution in which the LMF positions the terminal device, refer to related descriptions in the foregoing embodiment. Details are not described herein again.

In this way, according to the technical solution in this embodiment of this application, the LMF can receive the second assistance information from the access network device, to perform calculation related to integrity, to more accurately determine whether positioning is reliable, and help improve positioning reliability.

In a schematic flowchart in FIG. 9B, the positioning method includes the following steps.

901: An AMF sends a request message to an LMF.

904: A terminal device sends second assistance information to the LMF.

Correspondingly, the LMF receives the second assistance information from the access network device.

For example, in a downlink positioning scenario, the LMF may receive the second assistance information from the terminal device by using provide location information. Specifically, the provide location information sent by the terminal device to the LMF includes the second assistance information requested by the LMF. In this way, the LMF receives the second assistance information from the terminal device by using the provide location information, to better adapt to an existing positioning procedure.

Optionally, before the terminal device sends the provide location information to the LMF, the LMF sends request location information to the terminal device. The request location information may be for requesting the second assistance information. In this way, the terminal device may include, based on the request location information, the second assistance information in the provide location information sent to the LMF. Alternatively, the request location information may not request the second assistance information. The terminal device may alternatively include the second assistance information in the provide location information sent to the LMF.

Optionally, the second assistance information in the provide location information may include but is not limited to one or more of a measurement error model and a measurement error.

903: The LMF positions the terminal device.

Solutions in which the LMF positions the terminal device include a terminal device-based positioning solution and an LMF-based positioning solution. For a specific solution in which the LMF positions the terminal device, refer to related descriptions in the foregoing embodiment. Details are not described herein again.

In this way, according to the technical solution in this embodiment of this application, the LMF can receive the second assistance information from the terminal device, to perform calculation related to integrity, to more accurately determine whether positioning is reliable, and help improve positioning reliability.

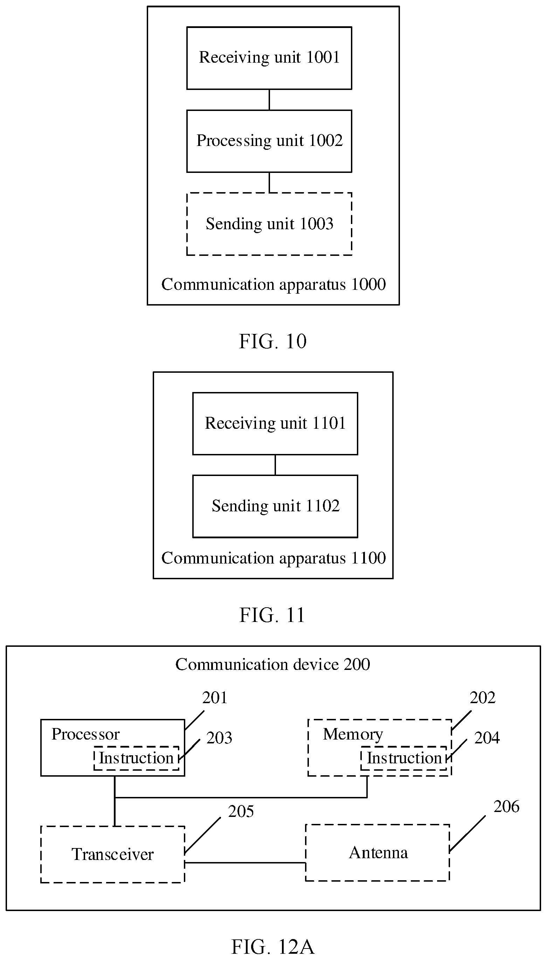

FIG. 10 is a schematic structural diagram of a communication apparatus according to an embodiment of this application. The communication apparatus 1000 in this embodiment of this application may be an LMF, an apparatus including the LMF, or a component that can be used in the LMF. The communication apparatus 1000 includes:
a receiving unit 1001, configured to receive a request message, where the request message is for requesting to position a terminal device, and the request message includes integrity information of positioning; and
a processing unit 1002, configured to position the terminal device.

The integrity information includes information for indicating a requirement on positioning integrity.

In the technical solutions of this application, the request message includes the integrity information. The integrity information includes the information for indicating the requirement on positioning integrity. In this way, in a process in which the LMF obtains a location, the LMF can determine a positioning requirement based on the integrity information in the request message, to evaluate positioning reliability.

In some embodiments, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when a location obtained by a location management function device does not satisfy the requirement on positioning integrity to time when an alert is raised.

In some embodiments, the request message includes quality of service QoS, and the integrity information that the QoS includes belongs to the QoS.

In some embodiments, the integrity information includes a key performance indicator of integrity.

In some embodiments, in the aspect of positioning the terminal device, the processing unit 1002 is specifically configured to:
send a first request to a first network element by using a sending unit 1003 of the communication apparatus 1000, where the first request is for requesting a measurement quantity, the measurement quantity includes a measurement quantity for obtaining a protection level, and the protection level represents a statistical value of a positioning error;
receive, by using the receiving unit from the first network element, the measurement quantity for obtaining the protection level; and
obtain a location of the terminal device and the protection level.

In some embodiments, the first network element is an access network device or the terminal device.

In some embodiments, in the aspect of obtaining the location of the terminal device and the protection level, the processing unit 1002 is specifically configured to:
send request location information by using the sending unit, where the request location information is for requesting the terminal device to perform positioning, and the request location information includes the measurement quantity for obtaining the protection level; and
receive provide location information from the terminal device by using the receiving unit.

The provide location information includes the location of the terminal device and at least one of the following: the protection level, a result obtained through comparison between the protection level and the key performance indicator, or an alert message.

In some embodiments, the processing unit 1002 is further configured to:
determine, with reference to the alert limit and the protection level, whether the alert message needs to be sent.

If yes, the location management function device sends the alert message to an access and mobility management function device.

In some embodiments, in the aspect of positioning the terminal device by the location management function device, the processing unit 1002 is further configured to:
send the integrity information to the terminal device by using the sending unit.

In some embodiments, the receiving unit 1001 is further configured to:
receive an alert message from the terminal device.

In some embodiments, the receiving unit 1001 is further configured to:
receive assistance information from the access network device or the terminal device, where the assistance information is for assisting in determining the location of the terminal device and/or determining the protection level.

In some embodiments, the sending unit 1003 is further configured to:
send assistance information to the terminal device, where the assistance information is for assisting in determining the location of the terminal device and/or determining the protection level.

In some embodiments, the assistance information includes at least one of the following: information indicating whether a positioning reference signal PRS is available, a PRS error model, a downlink positioning error model, an uplink positioning error model, a measurement error model, a measurement error, and an SRS error model.

The downlink positioning error model is used by the terminal device to assist in determining the location during downlink positioning, and the uplink positioning error model is used by the terminal device to assist in determining the location during uplink positioning.

It should be understood that explanations, descriptions, and technical effects of the foregoing embodiments of the positioning method are also applicable to the communication apparatus in this embodiment of this application. Details are not described herein again.

FIG. 11 is a schematic structural diagram of a communication apparatus. The communication apparatus 1100 in this embodiment of this application may be a terminal device, an apparatus including the foregoing terminal device, or a component that can be used in the terminal device. The communication apparatus 1100 includes:
a receiving unit 1101, configured to receive request location information from a location management function device, where the request location information includes integrity information; and
a sending unit 1102, configured to send provide location information to the location management function device.

The integrity information includes information for indicating a requirement on positioning integrity.

In the technical solutions of this application, the request location information includes the integrity information. The integrity information includes the information for indicating the requirement on positioning integrity. In this way, in a process in which the terminal device obtains a location, the terminal device can determine a positioning requirement based on the integrity information in the request message, to evaluate positioning reliability.

In some embodiments, the integrity information includes at least one of the following:
an alert limit, where the alert limit represents a limit value of an acceptable positioning error;
an integrity risk, where the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, where the time to alert represents allowed time from time when the location obtained by the location management function device does not satisfy the requirement on positioning integrity to time when an alert is raised.

In some embodiments, the integrity information includes a key performance indicator of integrity.

In some embodiments, the provide location information includes one or more of the following: a location of the terminal device, a measurement quantity for determining the location of the terminal device, a protection level, a result obtained through comparison between the protection level and the key performance indicator, or an alert message

The protection level represents a statistical value of the positioning error.

In some embodiments, the receiving unit 1101 is further configured to receive assistance information from the location management function device, where the assistance information is for assisting in determining the location of the terminal device and/or determining the protection level.

In some embodiments, the assistance information includes at least one of the following: information indicating whether a positioning reference signal PRS is available, a PRS error model, a downlink positioning error model, an uplink positioning error model, a measurement error model, a measurement error, and an SRS error model. The downlink positioning error model is used by the terminal device to assist in determining the location during downlink positioning, and the uplink positioning error model is used by the terminal device to assist in determining the location during uplink positioning.

Related functions of the terminal device, the location management function device, or the access network device in embodiments of this application may be implemented by using a communication device 200 in FIG. 12A. FIG. 12A is a schematic structural diagram of a communication device 200 according to an embodiment of this application. As shown in FIG. 12A, the communication device 200 may include a processor 201 and a transceiver 205, and optionally further includes a memory 202.

The transceiver 205 may be referred to as a transceiver unit, a transceiver machine, a transceiver circuit, or the like, and is configured to implement a transceiver function. The transceiver 205 may include a receiver and a transmitter. The receiver may be referred to as a receiver, a receiver circuit, a receiving unit, or the like, and is configured to implement a receiving function. The transmitter may be referred to as a transmitter, a transmitter circuit, a sending unit, or the like.

The memory 202 may store a computer program, software code, or instructions 204, where the computer program, the software code, or the instructions 204 may also be referred to as firmware. The processor 201 may control a MAC layer and a PHY layer by running a computer program, software code, or instructions 203 in the processor 201, or by invoking the computer program, the software code, or the instructions 204 stored in the memory 202, to implement a signal transmission method provided in the following embodiments of this application. The processor 201 may be a central processing unit (central processing unit, CPU), and the memory 202 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication device 200 may further include an antenna 206. The modules included in the communication device 200 are merely examples for description, and are not limited in this application.

As described above, the communication device 200 described in the foregoing embodiments may be a location management function device or a terminal device. However, a scope of the communication device described in this application is not limited thereto, and a structure of the communication device may not be limited by FIG. 12A. The communication device may be an independent device or may be a part of a large device. For example, an implementation form of the communication device may be:
(1) an independent integrated circuit IC, a chip, a chip system, or a subsystem; (2) a set including one or more ICs, where optionally, the set of ICs may also include a storage component for storing data and instructions; (3) a module that can be embedded in other devices; (4) a receiver, an intelligent terminal, a wireless device, a handheld device, a mobile unit, a vehicle-mounted device, a cloud device, an artificial intelligence device, or the like; or (5) others.

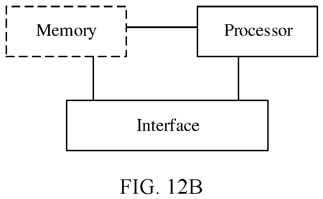

For the communication device implemented in the form of the chip or the chip system, refer to a schematic structural diagram of a chip shown in FIG. 12B. The chip shown in FIG. 12B includes a processor and an interface. There may be one or more processors, and there may be a plurality of interfaces. The interface is for receiving and transmitting a signal. Optionally, the chip or the chip system may include a memory. The memory is configured to store program instructions and data that are necessary for the chip or the chip system.

Embodiments of this application do not limit the protection scope and applicability of the claims. Persons skilled in the art may adaptively change functions and deployments of elements in this application, or omit, replace, or add various processes or components as appropriate without departing from the scope of embodiments of this application.

In an implementation, the communication device 200 is the location management function device in the foregoing method embodiments, and the communication device 200 may implement, by using the processor and the transceiver, some or all steps of any method performed by the location management function device in embodiments of this application.

For example, the transceiver 205 may be configured to receive a request message, where the request message is for requesting to position a terminal device, and the request message includes integrity information of positioning; and
the processor 201 may be configured to position the terminal device.

In another implementation, the communication device 200 is the terminal device in the foregoing method embodiments, and the communication device 200 is the terminal device in the foregoing method embodiments. The communication device 200 may implement, by using a processor and a transceiver, some or all steps of any method performed by the terminal device in embodiments of this application.

For example, the transceiver 205 may be configured to receive request location information from a location management function device, where the request location information includes integrity information; and send provide location information to the location management function device.

This application provides a computer-readable storage medium. The computer-readable storage medium stores computer instructions, and the computer instructions indicate a terminal device to perform the positioning method in any one of the foregoing embodiments.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor

It should be noted that the memory described in this specification aims to include but is not limited to these memories and any memory of another proper type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual needs to achieve the objective of the solutions of embodiments.

In addition, functional units in embodiments of this application may be integrated into one processing unit, or each of the units may exist alone physically, or two or more units may be integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules in the apparatus in embodiments of this application may be combined, divided, and deleted depending on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A positioning method, comprising:
receiving, by a location management function device, a request message, wherein the request message is for requesting to position a terminal device, and the request message comprises integrity information of positioning; and
positioning, by the location management function device, the terminal device, wherein
the integrity information comprises information for indicating a requirement on positioning integrity.

2. The method according to claim 1, wherein the integrity information comprises at least one of the following:
an alert limit, wherein the alert limit represents a limit value of an acceptable positioning error;
an integrity risk, wherein the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, wherein the time to alert represents allowed time from time when a location obtained by the location management function device does not satisfy the requirement on positioning integrity to time when an alert is raised.

3. The method according to claim 1, wherein the request message comprises quality of service QoS, and the integrity information belongs to the QoS.

4. The method according to any one of claims 1 to 3, wherein the integrity information comprises a key performance indicator of integrity.

5. The method according to any one of claims 1 to 4, wherein the positioning, by the location management function device, the terminal device comprises:
sending, by the location management function device, a first request to a first network element, wherein the first request is for requesting a measurement quantity, the measurement quantity comprises a measurement quantity for obtaining a protection level, and the protection level represents a statistical value of the positioning error;
receiving, by the location management function device from the first network element, the measurement quantity for obtaining the protection level; and
obtaining, by the location management function device, a location of the terminal device and the protection level.

6. The method according to claim 5, wherein the first network element is an access network device or the terminal device.

7. The method according to claim 5 or 6, wherein the obtaining, by the location management function device, a location of the terminal device and the protection level comprises:
sending, by the management function device, request location information to the terminal device, wherein the request location information is for requesting the terminal device to perform positioning, and the request location information comprises the measurement quantity for obtaining the protection level; and
receiving, by the location management function device, provide location information from the terminal device, wherein
the provide location information comprises the location of the terminal device and at least one of the following: the protection level, a result obtained through comparison between the protection level and the key performance indicator, or an alert message.

8. The method according to any one of claims 5 to 7, wherein the method further comprises:
determining, by the location management function device with reference to the alert limit and the protection level, whether the alert message needs to be sent, and
if yes, sending, by the location management function device, the alert message to an access and mobility management function device.

9. The method according to any one of claims 1 to 4, wherein the positioning, by the location management function device, the terminal device comprises:
sending, by the location management function device, the integrity information to the terminal device.

10. The method according to claim 9, wherein the method further comprises:
receiving, by the location management function device, an alert message from the terminal device.

11. The method according to any one of claims 5 to 10, wherein the method further comprises:
receiving, by the location management function device, assistance information from the access network device or the terminal device, wherein the assistance information is for assisting in determining the location of the terminal device and/or determining the protection level.

12. The method according to any one of claims 5 to 10, wherein the method further comprises:
sending, by the location management function device, assistance information to the terminal device, wherein the assistance information is for assisting in determining the location of the terminal device and/or determining the protection level.

13. The method according to claim 11 or 12, wherein the assistance information comprises at least one of the following: information indicating whether a positioning reference signal PRS is available, a PRS error model, a downlink positioning error model, an uplink positioning error model, a measurement error model, a measurement error, and an SRS error model, wherein
the downlink positioning error model is used by the terminal device to assist in determining the location during downlink positioning, and the uplink positioning error model is used by the terminal device to assist in determining the location during uplink positioning.

14. A positioning method, comprising:
receiving, by a terminal device, request location information from a location management function device, wherein the request location information comprises integrity information; and
sending, by the terminal, provide location information to the location management function device, wherein
the integrity information comprises information for indicating a requirement on positioning integrity.

15. The method according to claim 14, wherein the integrity information comprises at least one of the following:
an alert limit, wherein the alert limit represents a limit value of an acceptable positioning error;
an integrity risk, wherein the integrity risk represents a probability that a positioning error is greater than an alert limit, the integrity risk represents a probability that a positioning error is less than an alert limit, the integrity risk represents a probability that a positioning error is greater than or equal to an alert limit, or the integrity risk represents a probability that a positioning error is less than or equal to an alert limit; and
time to alert, wherein the time to alert represents allowed time from time when the location obtained by the location management function device does not satisfy the requirement on positioning integrity to time when an alert is raised.

16. The method according to claim 14 or 15, wherein the integrity information comprises a key performance indicator of integrity.

17. The method according to any one of claims 14 to 16, wherein the provide location information comprises one or more of the following: a location of the terminal device, a measurement quantity for determining the location of the terminal device, a protection level, a result obtained through comparison between the protection level and the key performance indicator, or an alert message, wherein
the protection level represents a statistical value of the positioning error.

18. The method according to claim 17, wherein the method further comprises:
receiving, by the terminal device, assistance information from the location management function device, wherein the assistance information is for assisting in determining the location of the terminal device and/or determining the protection level.

19. The method according to claim 18, wherein the assistance information comprises at least one of the following: information indicating whether a positioning reference signal PRS is available, a PRS error model, a downlink positioning error model, an uplink positioning error model, a measurement error model, a measurement error, and an SRS error model, wherein
the downlink positioning error model is used by the terminal device to assist in determining the location during downlink positioning, and the uplink positioning error model is used by the terminal device to assist in determining the location during uplink positioning.

20. A communication device, comprising a processor and a memory, wherein the memory is configured to store computer instructions, and the processor executes the computer instructions, to enable the communication device to perform the method according to any one of claims 1 to 13, or enable the communication device to perform the method according to any one of claims 14 to 19.

21. A computer-readable storage medium, wherein the computer-readable storage medium stores computer instructions, and the computer instructions indicate a communication device to perform the method according to any one of claims 1 to 13 or the method according to any one of claims 14 to 19.

22. A chip, comprising a processor and an interface, configured to execute a computer program or instructions stored in a memory, to perform the method according to any one of claims 1 to 13 or the method according to any one of claims 14 to 19.

23. A computer program product, wherein the computer program product comprises a computer program; and when the computer program is run on a computer, the computer is enabled to perform the method according to any one of claims 1 to 13 or the method according to any one of claims 14 to 19.
